# EUROPEAN PATENT SPECIFICATION

(11) **EP 3 176 493 B1**
(45) Date of publication and mention of the grant of the patent: **30.12.2020**
(21) Application number: 16200369.3
(22) Date of filing: 23.11.2016
(51) Int. Cl.: B60Q 1/10, B60Q 1/12, F21S 41/148, F21S 41/153, F21S 41/663, F21S 41/675

(54) **ROTATING LIGHTING MODULE AND LIGHTING DEVICE FOR VEHICLES**
ROTIERENDES BELEUCHTUNGSMODUL UND BELEUCHTUNGSVORRICHTUNG FÜR FAHRZEUGE
MODULE D'ÉCLAIRAGE ROTATIF ET DISPOSITIF D'ÉCLAIRAGE POUR VÉHICULE

(30) Priority: 24.11.2015 CN 201510820588; 24.11.2015 CN 201520942744 U
(43) Date of publication of application: 07.06.2017
(73) Proprietor: Marelli Automotive Lighting Italy S.p.A., 10078 Venaria Reale (TO) (IT); PSA Automobiles SA, 78300 Poissy (FR)
(72) Inventor: RODRIGUEZ ORTEGA, Pablo, 10078 VENARIA REALE (IT); RENARD, Stephanie, 10078 VENARIA REALE (IT); ZATTONI, Sergio, 10078 VENARIA REALE (IT); GONCALVES, Whilk Marcelino, 78140 VELIZY VILLACOUBLAY (FR); ROTTSTAEDT, Olaf, 10078 VENARIA REALE (IT); LUO, Juan, WUHU, Anhui (CN)
(74) Representative: Plebani, Rinaldo

(56) References cited:
- EP-A1- 2 902 701
- WO-A1-2012/098142
- DE-A1-102007 040 728
- FR-A1- 3 016 685
- US-A1- 2003 133 309
- US-A1- 2008 144 329
- US-A1- 2008 247 182
- US-A1- 2012 257 400

## Description

### Technical field of the invention

The present invention relates to a lighting device equipped with one or more lighting modules having rotation capabilities in order to provide selectively more than one optical functions, like signaling functions as position light, direction light, welcome light, DRL (Daytime Running Light), and/or lighting functions like a forward low beam (cross beam)or fog beam provided with advanced adaptive functions like AFS (Adaptive Function System) and DBL (Dynamic Bending Light).

### Technical Background

Lighting devices for vehicles provided with rotating elements, like a rotating reflector, are known in the art.

US4868721 discloses a lighting module comprising a light source and at least one reflector, wherein the reflector is motorized and is designed to intercept a concentrated unidirectional pencil of light produced by the light source, which is fixed with respect to the reflector, causing, due to its rotation around a fixed axis, a continuous rapid scanning of the pencil of light within a predetermined solid angle.

EP2957822 discloses a lighting device including a fixed reflector and a fixed light source; the light source is aligned with an axis, around which a couple of opposite screens may rotate under the action of a motor actuator; the two screens embody two lenses, e.g. one provided with prisms and one neutral, in order to change the light distribution provided by the light source and the reflector when each of the screens is selectively rotated in front of the reflector.

EP2902701 discloses a device of the kind of that of US4868721, but wherein the light source is a LED and the reflector consists of a rotating support having two opposite faces, one constituting the reflector and the other realizing a second function, e.g. an aspect function; a fixed motor rotates the support with respect to the fixed light source in order to bring selectively the two faces on the front side of the device facing toward the direction of motion of the vehicle; the support also bears at its opposite faces two light guides operatively associated with a second LED.

The lighting device according to US4868721 is generally expensive to be produced and may be of complex operation; moreover it may be incapable to meet the modern lighting requirements which imply the capacity of the lighting device to be adaptive to different running situations of the vehicle, e.g. to follow a turn when the driving wheel is rotated and/or to raise or lower the light beam emitted by the device e.g. during a country run or a city run.

EP2902701 and EP2957822 make use of lenses which also are light guides which receive in a central position the light emitted by the light source and have to guide the light toward their respective perimeter edges to e.g. generate a DRL or other signaling light distribution, which may cause a possible interference with the main lighting function of the device or anyway reduce its efficiency. Moreover, the device may generate only two different main light functions, each by means of one of the two reflective surfaces of the support.

US2008/0247182 A1 discloses a vehicle lamp with rotating lamp units.

### Summary of the invention

The object of the present invention is to provide a rotating lighting module for equipping a lighting device for vehicles that is compact, simple and cost-effective in construction and highly reliable, while ensuring at the same time a high flexibility in terms of possible light functions that can be generated.

According to the invention, therefore, a lighting module and a device for vehicles are provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a partially sectioned side elevation view of a rotating lighting module according to the invention wherein the bottom part is missing in order to show better the main components thereof;
- figure 2 shows schematically and in its entirety a perspective view of the lighting module of figure 1 and of a lighting device for a vehicle, with parts removed for simplicity, incorporating the lighting module of figure 1;
- figure 3 shows a front elevation view of the lighting module of figures 1 and 2; and
- figure 4 shows in an enlarged scale, a three quarters perspective view from the rear of a component of the lighting module of figures 1 and 2.

### Detailed description

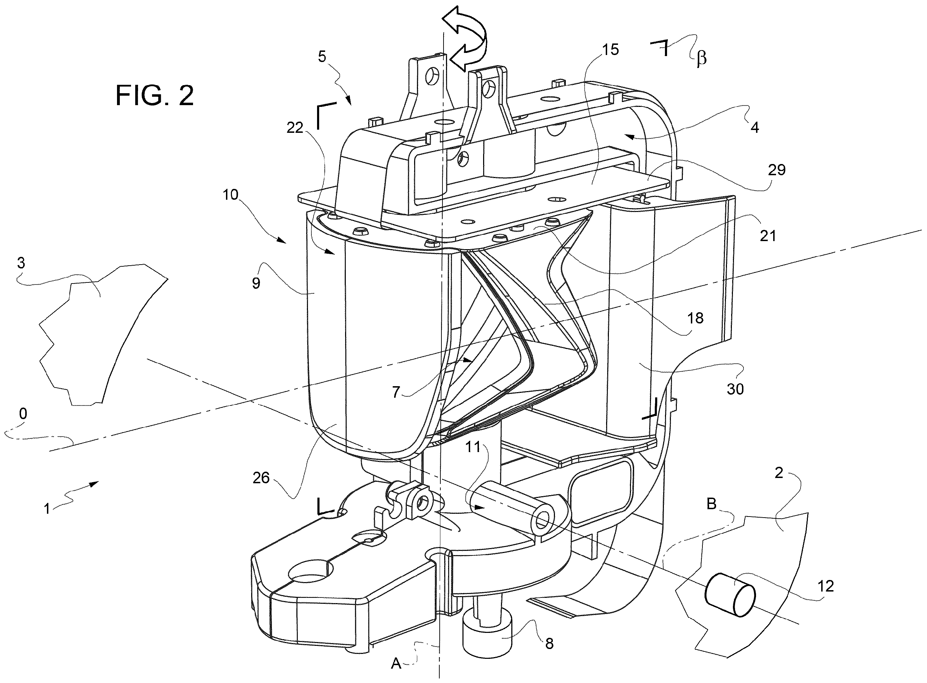

With reference to figure 2, reference numeral 1 indicates as a whole a lighting device consisting, in the non limiting embodiment shown, in a vehicle headlight, which is only in part and only schematically shown. It is however to be intended that what will be described can be applied to any vehicle lighting device.

The lighting device 1 comprises a generally cup-shaped housing 2 designed to be mounted on a vehicle, known and shown only in part for sake of simplicity. Housing 2 is made of synthetic plastic material by injection molding and has a front inlet opening in use facing opposite to the vehicle and along a driving direction of the vehicle, closed by a transparent cover 3.

According to the present invention, housing 2 carries at the interior thereof at least one lighting module 5. Of course, housing 2 may carry within it more than one lighting module 5 (e.g. two or three, arranged side by side) that may be visible from the outside through the transparent cover 3.

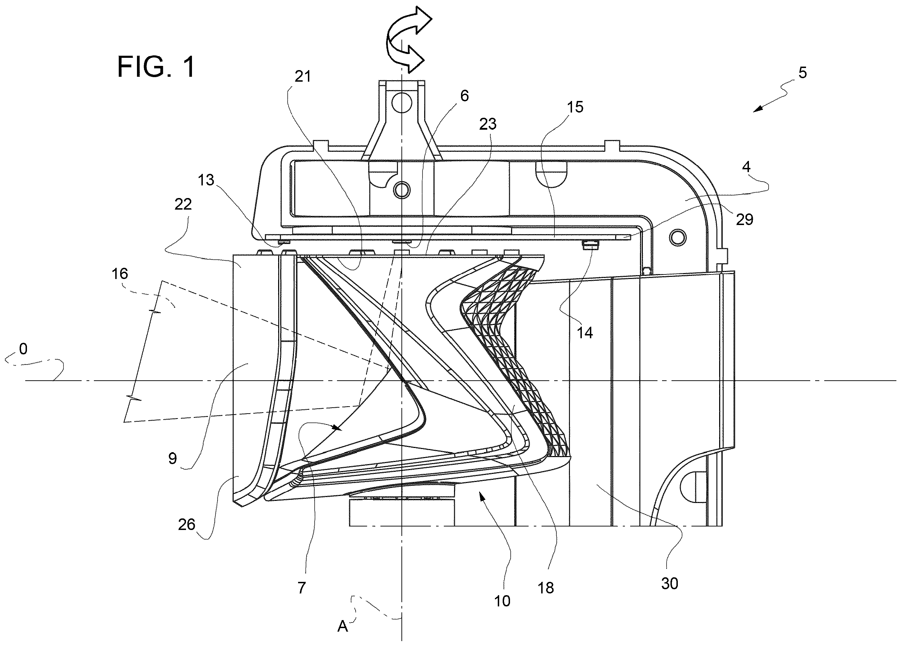

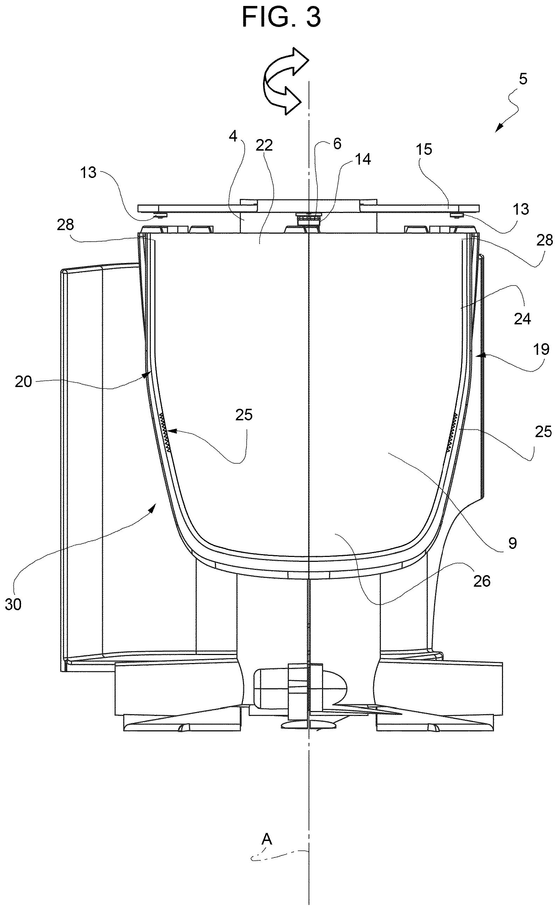

The lighting module 5 is shown in more details in figures 1 and 3 and is arranged facing the front transparent screen/cover 3 closing the cup-shaped housing 2.

The lighting module 5 is of the rotating type and is designed to specifically equip a lighting device for vehicles like lighting device 1.

The rotating lighting module 5 comprises at least one first light source 6, at least one first reflector 7 and at least one first actuator 8 (Figure 2) to rotate the first reflector 7 relative to the first light source 6 around a first axis A.

The rotating lighting module 5 further comprises a framed support 4 holding rigid in a fixed position the first light source 6 and bearing in idling manner the first reflector 7; the framed support 4 also bears the first actuator 8, which consists, in the non limiting embodiment shown, in a rotating electric motor.

The rotating lighting module 5 further comprises a lens 9 placed in front of the first reflector 7 and assembled angularly rigid therewith to rotate rigid with the first reflector 7 and eccentrically to axis A, so that both lens 9 and first reflector 7 forms together a rotating unit 10 powered by the first actuator 8.

According to a feature of the invention, the framed support 4 is also provided with a hinge connector 11 (Figure 3) which is operatively associated with a second actuator 12 (Figure 2), embodied in the non limiting embodiment shown by a second rotating electric motor, designed rotate the framed support 4, and the rotating unit 10 therewith, around a second axis B substantially perpendicular to the first axis A and coaxial with the hinge connector 11 in order to tilt up and down by a predetermined angle the rotating unit 10 around axis B.

According to a feature of the invention, the second axis B is moreover always transversal to a middle plane β (figure 2) of the rotating unit 10, which middle plane β passes through lens 9 and the first axis A and is perpendicular thereto when the rotating unit 10 is not rotated relative to the framed support 4.

According to the preferred embodiment of the invention, the first light source 6 is a LED; moreover, the lighting module 5 further comprises a couple of second light sources 13 and a third light source 14, all constituted by different LEDs; preferably, as in the embodiment shown, the LEDs constituting the first, second and third light sources 6, 13 and 14 are assembled on a printed circuit board 15 in specific positions and the printed circuit board 15 is carried in a fixed manner by the framed support 4 directly above the rotating unit 10 and on the side opposite to the first actuator 8.

The first light source 6 is arranged substantially aligned with the first axis A and faces the first reflector 7, this latter being designed to collect the light emitted by the first light source 6 and to deviate it as a shaped light beam 16 (shown schematically in dotted lines in figure 1) through the lens 9. The direction of propagation of the light beam 16 defines an optical axis O of the lighting module 5 (figure 1) and of the whole lighting device 1 (figure 2), which optical axis O is directed parallel to the running forward direction of the vehicle on which the lighting device 1 is mounted and lies on the middle plane β. According to the invention, therefore, by activating the first actuator 8 (e.g. electric motor) the light beam 16 may be rotated by a first, predetermined angle around axis A in a plane parallel to a plane perpendicular to plane β, and by activating the second actuator 12 (e.g. an independent electric motor), the light beam 16 may be rotated by a second, predetermined angle around axis B in the plane β, so as to raise or lower the light beam 16 in front of the vehicle. These two rotation movements may be activated independently of each other, one at a time, in sequence or simultaneously.

According to the preferred embodiment of the invention, the rotating unit 10 further comprises a backing holder 18 for the first reflector 7, which backing holder 18 is angularly rigid with the reflector 7 and with the lens 9 and is arranged on the rear of the first reflector 7, on the side opposite to the lens 9 in relation to the first reflector 7; the backing holder 18 is wider than the first reflector 7 so as to flank the first reflector 7 on both lateral sides 19,20 (figure 3) of the lens 9.

Moreover, the rotating unit 10 further comprises a flange element 21 (figures 1 and 2) which mechanically connects on the side opposite to the first actuator 8 an upper end 22 of the lens with the backing holder 18; the flange element 21 is wider than the lens 9 (figure 2 and 3) so as to flank the first reflector 7 on both lateral sides thereof.

The flange element 21 is also provided with a through hole 23 (figure 1) facing the first light source 6 and designed to let a predetermined amount only of the light emitted by the first light source 6 to pass through the flange element 21 to reach the first reflector 7. Moreover, the lens 9 is optically neutral so as the light beam 16 is shaped according to the required photometric characteristics solely by the reflector 9.

Owing to the construction described above, the light beam 16 emitted by the light source 6 and shaped by reflector 7 is laterally shielded by the lateral edges of the backing holder 18 and, towards the upper end 22 of lens 9, by the lateral edges of the flange element 21. Moreover, the structure of the rotating unit 10 results to be quite rigid, so that the light distribution obtainable by means of reflector 7 is not affected by the vibrations to which the lighting module 5 is subjected during the normal running of the vehicle on the road or off-road, notwithstanding to be able to rotate around the two axes A and B.

Furthermore, owing to the construction described above, the light source 6 may generate a light beam 16 which is adaptive and that may be changed in direction, distribution and intensity according to different running conditions of the vehicle. For instance, the light source 6 and reflector 7 may be designed in order to generate a low (cross-) beam function having AFS (Adaptive Function System) and DBL (Dynamic Bending Light) capabilities, which capabilities may be obtained by merely rotating the rotating unit 10 around axis A and/or by rotating the whole lighting module 5 around axis B. Moreover, by appropriately designing the shape of the reflector 7, which may be of the complex surfaces type, it could be obtainable a light beam 16 having a different light distribution/intensity using the same light source 6, by merely rotating the reflector 7 of a appropriate angle around axis A, maintaining at the same time the possibility to implement also the AFS and/or the DBL function.

When a optically neutral lens 9 is used according to the preferred embodiment of the invention, further lighting functions may be implemented owing to the general construction of the lighting module 5 as described above.

According to the preferred embodiment, in fact, lens 9, other than being optically neutral, bears a U-shaped light guide 24 having microprisms 25; the light guide 24 is arranged peripherally around both lateral sides 19,20 of the lens 9 and around a bottom end 26 of the lens 9 facing opposite to the upper end 22 and the flange element 21; the bottom end 26 is also connected rigid with the reflector 7 and the backing holder 18 thereof, so as the flange element 21, lens 9, reflector 7 and backing holder 18 realize a rigid frame structure constituting the rotating unit 10, freely rotatable around axis A. The electric motor 8 may be arranged coaxial with axis A and rigid with the framed support 4, so as only its shaft (not shown) rotates and engages the rotating unit 10, or it may also be arranged eccentrically to axis A and may rotate around axis A together with the rotating unit 10, being born rigid therewith and, e.g. having its rotating shaft (not shown) engaging a suitable gear transmission device provided in part rigid with the framed support 4, as it is obvious for the skilled in the art.

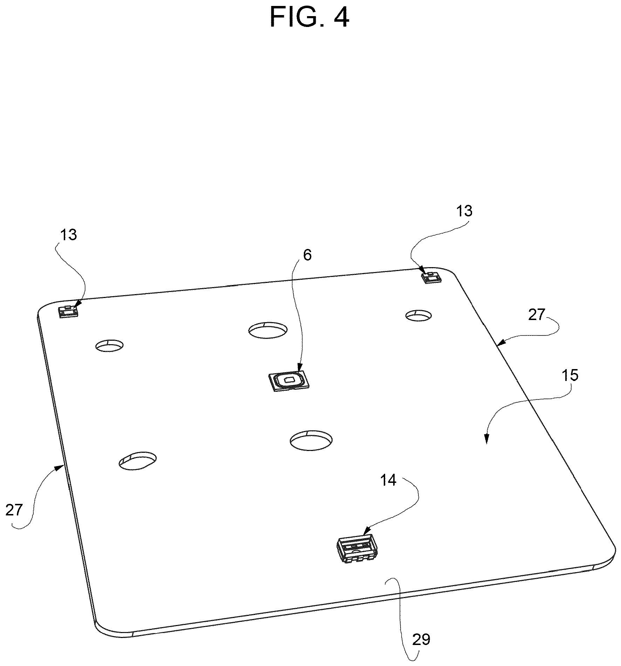

The light guide 24 is operatively associated with the couple of second light sources 13, which are arranged on the printed circuit board 15, which has in a plan view a rectangular shape, forward to the first light source 6 in relation to the lens 9 (i.e. closer to lens 9 than the light source 6) and on opposite lateral sides of the printed circuit board 15 close to respective opposite lateral edges 27 (figure 4) of the printed circuit board.

In this manner, the two LEDs 13 face opposite ends 28 of the light guide 24 when the rotating unit 10 assumes a first operative position (shown in figure 2) in which the rotating unit 10 is not rotated relative to the framed support 4.

In such a position the axis B, which is arranged substantially perpendicular to the lateral edges 27 of the rectangular printed circuit board 15, is also substantially perpendicular to the middle plane β.

According to a further aspect of the invention, the third light source 14 is an RGB LED and is arranged at a rear end 29 of the printed circuit board 15 opposite to the couple of second light sources 13; in combination, the framed support 4 bears at a middle portion thereof a second reflector 30, which is fixed in relation to the rotating unit 10 and is rigid with the framed support 4 arranged in such a position to be operatively associated with the third light source 14; in particular, the second reflector 30 is arranged on the rear of the first reflector 7 and spaced apart thereof, on the side opposite to the lens 9. Moreover, reflector 30 is laterally quite wider than lens 9, in order to laterally project beyond the lateral sides 19 and 20 of lens 9.

Owing to the further described structure, the lighting module 5 is able to implement, other than a low beam function with AFS and/or DBL capabilities, also a DRL and/or a position light function by means of the light guide 24 and a welcome light function by means of the RGB light source 14 and the reflector 30.

Such further functions are moreover not affected by the main low beam function and the latter is not affected by the presence of the light guide 24, both owing to the fact the lens 9 is optically neutral and owing to the presence of microprisms 25 in the light guide 24 and of the arrangement of the two light sources 13 at the ends 28 of the light guide 24, so that the lens 9 has not to carry out also the function of a light guide as in the prior art. The microprisms 25 in fact contain the light generated by the LEDs 13 within the light guide 24 without affecting lens 9.

Finally, the welcome light function leaves the lens 9 unlighted generating a desired light design.

All the aims of the invention are therefore accomplished.

## Claims

1. A rotating lighting module (5) designed to equip a lighting device (1) for vehicles, comprising at least one first light source (6), at least one first reflector (7) and at least one first actuator (8) to rotate the first reflector relative to the first light source around a first axis (A); wherein it further comprises:
i)- a framed support (4) holding rigid in a fixed position said first light source (6) and bearing in idling manner said first reflector (7), the framed support also bearing the first actuator (8);
ii)- a lens (9) placed in front of the first reflector (7) and assembled angularly rigid therewith to rotate rigid with the first reflector and eccentrically to said first axis (A); said lens (9) and said first reflector (7) forming together a rotating unit (10) powered by said first actuator;
iii)- said framed support (4) being provided with a hinge connector (11) and being operatively associated with a second actuator (12) designed to tilt the whole framed support (4) and the rotating unit (10) therewith around a second axis (B) substantially perpendicular to the first axis (A) and coaxial with said hinge connector (11);
iv)- said second axis (B) being always transversal to a middle plane (β) of said rotating unit (10) passing through said lens (9) and said first axis (A) ; whereby said first light source (6) is a LED; **characterised in that** said lighting module further comprising a couple of second light sources (13) and a third light source (14), all constituted by different LEDs, said first, second and third light sources (6,13,14) being assembled on a printed circuit board (15) which is carried in a fixed manner by said framed support (4) directly above the rotating unit (10) and on the side opposite to said first actuator (8).

2. Lighting module according to claim 1, **characterized in that** the first light source (6) is arranged substantially aligned with said first axis (A) and facing said first reflector (7), this latter being designed to collect the light emitted by the first light source (6) and to deviate it as a shaped light beam (16) through the lens (9).

3. Lighting module according to claim 1 or 2, **characterized in that** the rotating unit (10) further comprises a backing holder (18) for the first reflector, which backing holder is angularly rigid with the reflector (7) and with the lens (9) and is arranged on the rear of the first reflector, on the side opposite to the lens (9) in relation to the first reflector; said backing holder (18) being wider than the first reflector (7) so as to flank the first reflector on both lateral sides (19,20) of said lens (9).

4. Lighting module according to anyone of the preceding claims, **characterized in that** the rotating unit (10) further comprises a flange element (21) which mechanically connects on the side opposite to said first actuator (8) an upper end (22) of the lens (9) with a backing holder (18) for the first reflector (7), which backing holder is angularly rigid with the first reflector and is arranged on the rear thereof, opposite to the lens (9); the flange element (21) being wider than said lens (9) so as to flank the first reflector (7) on both lateral sides thereof; the flange element (21) being provided with a through hole (23) facing said first light source (6) and designed to let a predetermined amount only of the light emitted by the first light source to pass through the flange element (21) to reach the first reflector (7).

5. Lighting module according to anyone of the preceding claims, **characterized in that** said lens (9) is optically neutral.

6. Lighting module according to claim 5, **characterized in that** the lens (9) bears a U-shaped light guide (24) having microprisms (25) arranged peripherally around both lateral sides (19,20) of the lens and around a bottom end (26) of the lens facing opposite to a flange element (21) connecting an upper end (22) of the lens with a backing holder (18) of the first reflector, arranged on the rear thereof; said light guide (24) being operatively associated with said couple of second light sources (13), which are arranged forward to the first light source (6) in relation to the lens (9) and close to opposite lateral edges (27) of said printed circuit board (15), in order to face opposite ends (28) of the light guide (24) when the rotating unit (10) assumes a first operative position in which said rotating unit is not rotated relative to said framed support (4).

7. Lighting module according to anyone of the preceding claims, **characterized in that** the third light source (14) is an RGB LED and is arranged at a rear end (29) of the printed circuit board (15) opposite to the couple of second light sources (13); the framed support (4) bearing at a middle portion thereof a second reflector (30) operatively associated with the third light source (14) and arranged on the rear of the first reflector (7) and spaced apart thereof, on the side opposite to said lens (9).

8. Lighting device (1) for a vehicle such as a headlight or a headlamp, **characterized in that** it comprises at least one lighting module (5) according to anyone of the preceding claims arranged within a cup-shaped housing (2) designed to be mounted on a vehicle body and facing a front transparent screen (3) closing the cup-shaped housing.

9. Vehicle provided with a lighting device (1) according to claim 8.

## Patentansprüche

1. Drehbares Beleuchtungsmodul (5), das dafür ausgelegt ist, eine Beleuchtungsvorrichtung (1) für Fahrzeuge zu bestücken, und wenigstens eine erste Lichtquelle (6), wenigstens einen ersten Reflektor (7) und wenigstens einen ersten Aktor (8) zum Drehen des ersten Reflektors relativ zu der ersten Lichtquelle um eine erste Achse (A) umfasst; und ferner umfassend:
i) - einen gerahmten Halter (4), der die erste Lichtquelle (6) starr in einer festen Position hält und den ersten Reflektor (7) in inaktiver Weise trägt, wobei der gerahmte Halter auch den ersten Aktor (8) trägt;
ii) - eine Linse (9), die vor dem ersten Reflektor (7) angeordnet ist und winkelmäßig starr damit zusammengefügt ist, um sich starr mit dem ersten Reflektor und exzentrisch zu der ersten Achse (A) zu drehen; wobei die Linse (9) und der erste Reflektor (7) zusammen eine Dreheinheit (10) bilden, die von dem ersten Aktor angetrieben wird;
iii) - wobei der gerahmte Halter (4) mit einem Scharnierverbinder (11) versehen ist und operativ einem zweiten Aktor (12) zugeordnet ist, der dafür ausgelegt ist, den gesamten gerahmten Halter (4) und die Dreheinheit (10) mit diesem um eine zweite Achse (B) zu kippen, die im Wesentlichen senkrecht zu der ersten Achse (A) und koaxial zu dem Scharnierverbinder (11) ist;
iv) - wobei die zweite Achse (B) immer transversal zu einer Mittelebene (β) der Dreheinheit (10) ist, die durch die Linse (9) und die erste Achse (A) verläuft;
wobei die erste Lichtquelle (6) eine LED ist;
**dadurch gekennzeichnet, dass**
das Beleuchtungsmodul ferner ein Paar an zweiten Lichtquellen (13) und eine dritte Lichtquelle (14) umfasst, die alle von verschiedenen LEDs gebildet werden, wobei die ersten, zweiten und dritten Lichtquellen (6, 13, 14) auf einer gedruckten Leiterplatte (15) montiert sind, die von dem gerahmten Halter (4) direkt über der Dreheinheit (10) und auf der dem ersten Aktor (8) gegenüberliegenden Seite in fixierter Weise getragen wird.

2. Beleuchtungsmodul nach Anspruch 1, **dadurch gekennzeichnet, dass** die erste Lichtquelle (6) im Wesentlichen auf die erste Achse (A) ausgerichtet und dem ersten Reflektor (7) zugewandt angeordnet ist, wobei der letztere dafür ausgelegt ist, das von der ersten Lichtquelle (6) emittierte Licht zu sammeln und als einen geformten Lichtstrahl (16) durch die Linse (9) zu lenken.

3. Beleuchtungsmodul nach Anspruch 1 oder 2, **dadurch gekennzeichnet, dass** die Dreheinheit (10) ferner einen Rückseitenhalter (18) für den ersten Reflektor auf der in Bezug auf den ersten Reflektor der Linse (9) gegenüberliegenden Seite umfasst, wobei der Rückseitenhalter winkelmäßig starr mit dem Reflektor (7) und mit der Linse (9) ist und auf der Rückseite des ersten Reflektors angeordnet ist; wobei der Rückseitenhalter (18) breiter als der erste Reflektor (7) ist, so dass er den ersten Reflektor auf beiden lateralen Seiten (19, 20) der Linse (9) flankiert.

4. Beleuchtungsmodul nach einem der vorangehenden Ansprüche, **dadurch gekennzeichnet, dass** die Dreheinheit (10) ferner ein Flanschelement (21) umfasst, das auf der dem ersten Aktor (8) gegenüberliegenden Seite ein oberes Ende (22) der Linse (9) mechanisch mit einem Rückseitenhalter (18) für den ersten Reflektor (7) verbindet, wobei der Rückseitenhalter winkelmäßig starr mit dem ersten Reflektor ist und auf dessen Rückseite gegenüber der Linse (9) angeordnet ist; wobei das Flanschelement (21) breiter als die Linse (9) ist, so dass es den ersten Reflektor (7) auf beiden lateralen Seiten davon flankiert; wobei das Flanschelement (21) mit einem Durchgangsloch (23) versehen ist, das der ersten Lichtquelle (6) zugewandt ist und dafür ausgelegt ist, nur eine vorbestimmte Menge des von der ersten Lichtquelle emittierten Lichts durch das Flanschelement (21) durchzulassen, um den ersten Reflektor (7) zu erreichen.

5. Beleuchtungsmodul nach einem der vorangehenden Ansprüche, **dadurch gekennzeichnet, dass** die Linse (9) optisch neutral ist.

6. Beleuchtungsmodul nach Anspruch 5, **dadurch gekennzeichnet, dass** die Linse (9) einen U-förmigen Lichtleiter (24) mit Mikroprismen (25) trägt, die peripher um beide lateralen Seiten (19, 20) der Linse und um ein unteres Ende (26) der Linse herum angeordnet sind, das einem Flanschelement (21) zugewandt ist, das ein oberes Ende (22) der Linse mit einem Rückseitenhalter (18) des ersten Reflektors verbindet, der auf der Rückseite davon angeordnet ist; wobei der Lichtleiter (24) operativ dem Paar der zweiten Lichtquellen (13) zugeordnet ist, die in Bezug auf die Linse (9) vor der ersten Lichtquelle (6) und nahe an gegenüberliegenden Seitenkanten (27) der gedruckten Leiterplatte (15) angeordnet sind, um gegenüberliegenden Enden (28) des Lichtleiters (24) zugewandt zu sein, wenn die Dreheinheit (10) eine erste Betriebsposition einnimmt, in der die Dreheinheit nicht relativ zu dem gerahmten Halter (4) gedreht ist.

7. Beleuchtungsmodul nach einem der vorangehenden Ansprüche, **dadurch gekennzeichnet, dass** die dritte Lichtquelle (14) eine RGB-LED ist und an einem hinteren Ende (29) der gedruckten Leiterplatte (15) gegenüber dem Paar der zweiten Lichtquellen (13) angeordnet ist; wobei der gerahmte Halter (4) in seinem mittleren Abschnitt einen zweiten Reflektor (30) trägt, der operativ der dritten Lichtquelle (14) zugeordnet ist und auf der Rückseite des ersten Reflektors (7) und beabstandet davon auf der der Linse (9) gegenüberliegenden Seite angeordnet ist.

8. Beleuchtungsvorrichtung (1) für ein Fahrzeug, wie z.B. eine Frontleuchte oder einen Scheinwerfer, **dadurch gekennzeichnet, dass** sie wenigstens ein Beleuchtungsmodul (5) nach einem der vorangehenden Ansprüche umfasst, das in einem schalenförmigen Gehäuse (2) angeordnet ist, das dafür ausgelegt ist, an einer Fahrzeugkarosserie montiert zu werden, und das einer vorderen transparenten Scheibe (3) zugewandt ist, die das schalenförmige Gehäuse verschließt.

9. Fahrzeug, das mit einer Beleuchtungseinrichtung (1) nach Anspruch 8 versehen ist.

## Revendications

1. Module d'éclairage rotatif (5) conçu pour équiper un dispositif d'éclairage (1) pour véhicules, comprenant au moins une première source de lumière (6), au moins un premier réflecteur (7) et au moins un premier actionneur (8) pour faire tourner le premier réflecteur par rapport à la première source de lumière autour d'un premier axe (A) ; dans lequel il comprend en outre :
i)- un support à cadre (4) supportant de manière rigide dans une position fixe ladite première source de lumière (6) et portant de manière libre ledit premier réflecteur (7), le support à cadre portant également le premier actionneur (8) ;
ii)- une lentille (9) placée devant le premier réflecteur (7) et assemblée de manière angulairement rigide avec celui-ci pour tourner de manière rigide avec le premier réflecteur et de manière excentrique par rapport audit premier axe (A) ; ladite lentille (9) et ledit premier réflecteur (7) formant ensemble une unité rotative (10) alimentée par ledit premier actionneur ;
iii)- ledit support à cadre (4) étant pourvu d'un raccord d'articulation (11) et étant fonctionnellement associé à un second actionneur (12) conçu pour incliner l'ensemble du support à cadre (4) et l'unité rotative (10) avec celui-ci autour d'un second axe (B) sensiblement perpendiculaire au premier axe (A) et coaxial audit raccord d'articulation (11) ;
iv)- ledit second axe (B) étant toujours transversal à un plan central (β) de ladite unité rotative (10) traversant ladite lentille (9) et ledit premier axe (A) ; moyennant quoi ladite première source de lumière (6) est une LED ; **caractérisé en ce que** ledit module d'éclairage comprend en outre un couple de deuxièmes sources de lumière (13) et une troisième source de lumière (14), toutes constituées de différentes LED, lesdites première, deuxièmes et troisième sources de lumière (6, 13, 14) étant assemblées sur une carte de circuit imprimé (15) qui est portée d'une manière fixe par ledit support à cadre (4) directement au-dessus de l'unité rotative (10) et sur le côté opposé audit premier actionneur (8).

2. Module d'éclairage selon la revendication 1, **caractérisé en ce que** la première source de lumière (6) est agencée de manière sensiblement alignée sur ledit premier axe (A) et faisant face audit premier réflecteur (7), ce dernier étant conçu pour collecter la lumière émise par la première source de lumière (6) et pour la faire dévier en tant que faisceau lumineux façonné (16) à travers la lentille (9).

3. Module d'éclairage selon la revendication 1 ou 2, **caractérisé en ce que** l'unité rotative (10) comprend en outre un élément de maintien arrière (18) pour le premier réflecteur, lequel élément de maintien arrière est angulairement rigide avec le réflecteur (7) et avec la lentille (9) et est agencé sur l'arrière du premier réflecteur, sur le côté opposé à la lentille (9) par rapport au premier réflecteur ; ledit élément de maintien arrière (8) étant plus large que le premier réflecteur (7) de manière à flanquer le premier réflecteur sur les deux côtés latéraux (19, 20) de ladite lentille (9).

4. Module d'éclairage selon l'une quelconque des revendications précédentes, **caractérisé en ce que** l'unité rotative (10) comprend en outre un élément de bride (21) qui relie mécaniquement sur le côté opposé audit premier actionneur (8) une extrémité supérieure (22) de la lentille (9) à un élément de maintien arrière (18) pour le premier réflecteur (7), lequel élément de maintien arrière est angulairement rigide avec le premier réflecteur et est agencé sur l'arrière de celui-ci, à l'opposé de la lentille (9) ; l'élément de bride (21) étant plus large que ladite lentille (9) de manière à flanquer le premier réflecteur (7) sur les deux côtés latéraux de celui-ci ; l'élément de bride (21) étant pourvu d'un trou traversant (23) faisant face à ladite première source de lumière (6) et conçu pour laisser seulement une quantité prédéterminée de la lumière émise par la première source de lumière traverser l'élément de bride (21) pour atteindre le premier réflecteur (7).

5. Module d'éclairage selon l'une quelconque des revendications précédentes, **caractérisé en ce que** ladite lentille (9) est optiquement neutre.

6. Module d'éclairage selon la revendication 5, **caractérisé en ce que** la lentille (9) porte un guide de lumière en forme de U (24) possédant des micro-prismes (25) agencés de façon périphérique autour des deux côtés latéraux (19, 20) de la lentille et autour d'une extrémité inférieure (26) de la lentille tournée à l'opposé d'un élément de bride (21) reliant une extrémité supérieure (22) de la lentille à un élément de maintien arrière (18) du premier réflecteur, agencé sur l'arrière de celui-ci ; ledit guide de lumière (24) étant fonctionnellement associé audit couple de deuxièmes sources de lumière (13), qui sont agencées à l'avant de la première source de lumière (6) par rapport à la lentille (9) et près de bords latéraux opposés (27) de ladite carte de circuit imprimé (15), afin de faire face à des extrémités opposées (28) du guide de lumière (24) lorsque l'unité rotative (10) adopte une première position de fonctionnement dans laquelle ladite unité rotative ne tourne pas par rapport audit support à cadre (4).

7. Module d'éclairage selon l'une quelconque des revendications précédentes, **caractérisé en ce que** la troisième source de lumière (14) est une LED RVB et est agencée au niveau d'une extrémité arrière (29) de la carte de circuit imprimé (15) opposée au couple de deuxièmes sources de lumière (13) ; le support à cadre (4) portant au niveau d'une partie centrale de celui-ci un second réflecteur (30) fonctionnellement associé à la troisième source de lumière (14) et agencé sur l'arrière du premier réflecteur (7) et espacé de celui-ci, sur le côté opposé à ladite lentille (9).

8. Dispositif d'éclairage (1) pour un véhicule tel qu'un phare avant ou un feu avant, **caractérisé en ce qu'**il comprend au moins un module d'éclairage (5) selon l'une quelconque des revendications précédentes agencé dans un logement cupuliforme (2) conçu pour être monté sur une carrosserie de véhicule et faisant face à un écran transparent avant (3) fermant le logement cupuliforme.

9. Véhicule pourvu d'un dispositif d'éclairage (1) selon la revendication 8.
